# EUROPÄISCHE PATENTSCHRIFT

(11) **EP 3 741 989 B1**
(45) Veröffentlichungstag und Bekanntmachung des Hinweises auf die Patenterteilung: **13.10.2021**
(21) Anmeldenummer: 19175705.3
(22) Anmeldetag: 21.05.2019
(51) Int. Cl.: F03D 1/06, F03D 80/80

(54) **HALBZEUG FÜR EIN KABELFÜHRUNGSSYSTEM EINES WINDENERGIEANLAGENBAUTEILS, WINDENERGIEANLAGENBAUTEIL, WINDENERGIEANLAGENROTORBLATT SOWIE VERFAHREN**
WIND ENERGY FACILITY COMPONENT AND SEMI-FINISHED PRODUCT FOR A CABLE CONDUIT SYSTEM OF A WIND ENERGY FACILITY COMPONENT, WIND ENERGY ASSEMBLY ROTOR BLADE AND METHOD
PRODUIT SEMI-FINI POUR UN SYSTÈME DE GUIDAGE DE CÂBLE D'UN COMPOSANT D'ÉOLIENNE, COMPOSANT D'ÉOLIENNE, PALE DE ROTOR D'ÉOLIENNE AINSI QUE PROCÉDÉ

(43) Veröffentlichungstag der Anmeldung: 25.11.2020
(73) Patentinhaber: Nordex Energy SE & Co. KG, 22419 Hamburg (DE)
(72) Erfinder: Ohlerich, Nick, 18055 Rostock (DE); Henschen, Jonas, 23966 Wismar (DE)
(74) Vertreter: Epping - Hermann - Fischer

(56) Entgegenhaltungen:
- WO-A1-2013/001665
- WO-A1-2017/220096
- RU-C2- 2 617 837
- US-A1- 2010 181 268

## Beschreibung

Die Erfindung betrifft ein Halbzeug für eine Kabelführung bei einem Windenergieanlagenrotorblatt, ein Windenergieanlagenrotorblatt sowie Verfahren zum Herstellen einer Komponente eines Windenergieanlagenrotorblatts. Windenergieanlagen werden verwendet, um Energie des Windes in elektrische Energie umzuwandeln. Dazu weisen sie herkömmlich ein oder mehrere Rotorblätter, auch Windenergieanlagenrotorblätter genannt, auf. Für die Integration von elektrischen und optischen Systemen in einem Rotorblatt werden unterschiedlichste Kabel im Rotorblatt verlegt. Kabel können beispielsweise entlang der Innenschalen, des Hauptstegs sowie der Bodenplatte bis in die Nabe der Windenergieanlage verlaufen. Dabei existieren unterschiedliche Kabelführungssysteme. Beispielhaft sei auf die EP 2 532 883 B1 und WO 2017 220096 A1 verwiesen. Oftmals sind diese Systeme sehr montageintensiv und relativ unflexibel im Ort der Montage. Weiterhin erweisen sich diese Systeme oftmals als nicht wartungsfreundlich.

Eine Aufgabe, die der Erfindung zugrunde liegt, ist es, ein Konzept für ein Kabelführungssystem anzugeben, welches eine effiziente und flexible Anwendung in den Montageprozessen der Rotorblattfertigung und den Montageprozessen von Nachrüstungen im Feld ermöglicht. Darüber hinaus soll eine Reparatur und Wartung besonders gut möglich sein.

Gemäß einem Aspekt wird ein Halbzeug für ein Kabelführungssystem bei einem Windenergieanlagenbauteil offenbart. Das Halbzeug weist einen schichtartigen Aufbau auf. Der schichtartige Aufbau umfasst ein Trägerband und eine Mehrzahl von Kabelbefestigungselementen, die der Länge nach verteilt auf dem Trägerband festgelegt sind. Der Aufbau umfasst weiterhin eine Decklage mit mehreren Aus- oder Einschnitten, wobei die Kabelbefestigungselemente zwischen Decklage und Trägerband so angeordnet sind, dass jedes Kabelbefestigungselement zumindest teilweise aus einem entsprechenden Aus- oder Einschnitt aus der Decklage hervorragt.

Das beschriebene Halbzeug ist ausgebildet, an oder in einem Windenergieanlagenbauteil verbaut zu werden und ermöglicht so die Ausbildung eines Kabelführungssystems. Insbesondere ist mittels der Kabelbefestigungselemente das Montieren und Verlegen von Kabeln beziehungsweise Vorrichtungen wie Leerrohren zum Verlegen und Führen der Kabel möglich. Das Halbzeug kann in allen Phasen des Rotorblattlebenszyklus verbaut werden (Vorfertigung, Rohlingsbau, Ausrüstung, Komplettierung, Errichtung oder auch an der fertigen Anlage). Bei dem Windenergieanlagenbauteil handelt es sich insbesondere um ein Windenergieanlagenrotorblatt oder eine Komponente dessen wie beispielsweise um eine Rotorblatthalbschale, einen Steg, einen Gurt oder eine Bodenplatte. Das Halbzeug kann auch als Kabelhalterung oder Kabelhaltevorrichtung bezeichnet werden.

Das Halbzeug ist so ausgestaltet, dass es zum einen Bestandteil eines (Vakuum-)Infusionslaminates sein kann. Hierdurch ist es beispielsweise möglich, das Halbzeug im Rotorblattschalenbau oder auch im Bau von Vorfertigungsteilen (Stege, Bodenplatte) zu platzieren. Beispielsweise wird das Halbzeug als letzte Lage im Gelegeaufbau und vor den Materialien des Infusionsaufbaus positioniert. Nach dem Infusionsprozess und beispielsweise nach Abzug eines verwendeten Abreißgewebes liegen die Kabelbefestigungselemente frei und bedingen keiner weiteren Nacharbeit. Zum anderen kann das Halbzeug auch mittels Handlaminat, d.h. manuell, an bereits ausgehärtete Faserverbundwerkstoffstrukturen laminiert werden.

Für Reparaturen in der Fertigung oder im Feld sowie auch für Nachrüstungen ist eine Montage der Halbzeuge mittels Handlaminat denkbar. Hierbei kann beispielsweise auf Klebeharze verzichtet werden.

Die Verarbeitungszeit in einem Infusionsaufbau ist praktisch vernachlässigbar. Die Verarbeitungszeit beim Handlaminieren ist vergleichsweise deutlich geringer als bei bisher bekannten Kabelführungssystemen, insbesondere durch den Verzicht auf Klebeharze (beispielsweise zirka 50 % geringer).

Das offenbarte Halbzeug kann insbesondere aus vorkonfektionierten Standardteilen gefertigt werden, sodass sehr geringe Materialkosten realisiert werden können.

Das offenbarte Halbzeug kann vorkonfektioniert verwendet werden, etwa als Rollenware oder bereits der Länge nach vorkonfektioniert und direkt verbaubar. Durch die Verwendung derartig vorkonfektionierter Halbzeuge wird die Materialbeschaffung und Bereitstellung stark vereinfacht.

Des Weiteren ermöglicht das Halbzeug eine einfache Montage von Kabeln oder entsprechenden Hilfsmitteln, die selbst nicht zusätzlich verklebt werden müssen, sondern beispielsweise mechanisch mit den Kabelbefestigungselementen verbunden werden.

Ein weiterer Vorteil liegt darin, dass defekte Kabelbefestigungselemente oder Halbzeuge beispielsweise leicht abgeschliffen und überlaminiert werden können, beispielsweise mit neuen Kabelbefestigungselementen oder Halbzeugen.

Weiterhin ermöglicht das Halbzeug, dass mittels der Kabelbefestigungselemente verbundene Kabel über den gesamten Produktlebenszyklus frei zugänglich und dadurch besonders gut wartbar und austauschbar sind.

Weiterhin ermöglicht das Halbzeug ein geringes Gewicht, beispielsweise nur 250 g/m.

Das Trägerband weist beispielsweise ein Fasermaterial auf. Beispielsweise ist das Trägerband aus einem glasfaserverstärkten Kunststoff hergestellt. Das Trägerband ist insbesondere bereits ausgehärtet. Das Trägerband ist beispielsweise flexibel beziehungsweise biegbar ausgebildet, sodass eine Vorkonfektionierung und ein effizienter Transport des Halbzeuges, etwa durch Aufrollen auf eine Rolle, möglich ist.

Die Kabelbefestigungselemente sind ausgebildet für eine mittelbare oder unmittelbare Befestigung von Kabeln. Beispielsweise können Kabel direkt in die Kabelbefestigungselemente ohne weitere Hilfsmittel eingelegt, eingeklickt, eingerastet oder eingeschnappt werden. Alternativ oder zusätzlich können Kabel mittels Hilfsmitteln oder Verbindungselementen wie Kabelbindern an den Kabelbefestigungselementen befestigt werden. Alternativ oder zusätzlich sind die Kabelbefestigungselemente zur Aufnahme von Leerrohren ausgebildet, die wiederum mittelbar oder unmittelbar mit den Kabelbefestigungselementen verbunden werden können und ein oder mehrere Kabel führen können.

Das Trägerband ist beispielsweise so stark dimensioniert, dass ein Eindrücken der Kabelbefestigungselemente im schichtartigen Aufbau verhindert ist oder zumindest reduziert ist. Das Trägerband ermöglicht weiterhin eine gute Handhabung der Mehrzahl der Kabelbefestigungselemente, insbesondere bei der Festlegung an dem Trägerband.

Gemäß einer Ausführungsform sind die Kabelbefestigungselemente auf das Trägerband aufgeklebt. Dies trägt zu einer einfachen und sicheren Montage der Kabelbefestigungselemente für das Halbzeug bei.

Gemäß einer Ausführungsform weist das Halbzeug ein oder mehrere Klebebänder auf, etwa Gitterklebeband, welche zwischen der Decklage und dem Trägerband angeordnet sind und die Decklage und das Trägerband miteinander klebend verbinden. Das oder die Klebebänder können ebenfalls Aus- bzw. Einschnitte aufweisen, die zu denjenigen in der Decklage korrespondieren, sodass die Kabelbefestigungselemente sowohl durch die Decklage als auch das oder die Klebebänder durchtreten können. Das oder die Klebebänder verbinden demnach auch zumindest teilweise die Kabelbefestigungselemente mit der Decklage klebend. Das oder die Klebebänder tragen dazu bei, dass der schichtartige Aufbau mit den Kabelbefestigungselementen stabil zusammengehalten wird, sodass das Halbzeug als gesamte Einheit besonders einfach weiter verarbeitet beziehungsweise weiter verwendet werden kann bei der Herstellung des Windenergieanlagenbauteils beziehungsweise beim Anbringen des Halbzeugs an das Windenergieanlagenbauteil.

Gemäß einer Ausführungsform weist das Trägerband auf einer Unterseite, die dem Kabelbefestigungselement abgewandt ist, eine Lage eines Abreißgewebes auf. Bei dem Abreißgewebe handelt es sich um eine netzartige Lage, die vor dem Anbringen des Trägerbands auf das Windenergieanlagenbauteil beziehungsweise vor der Verarbeitung des Halbzeugs abgenommen oder abgezogen wird. Dadurch wird die Oberfläche des Trägerbandes für das anschließende Laminieren aktiviert. Insbesondere wird eine Haftung beziehungsweise Bindung des Trägerbands mit einem weiteren Material wie bei der Weiterverarbeitung optimiert.

Gemäß einer Ausführungsform weist die Decklage ein oder mehrere Fasermateriallagen auf. Beispielsweise weist die Decklage ein Fasergelege, etwa Glasfasergelege, auf. Die Verwendung von Kohlenstofffasern beziehungsweise Kohlenstofffasergelegen ist ebenfalls denkbar. Die Decklage dient insbesondere der Verbindung des Halbzeugs mit einer weiteren Komponente wie dem Windenergieanlagenbauteil in einem Laminationsprozess und ist zur Aufnahme eines aushärtenden, flüssigen Kunststoffmaterials wie Polyesterharz oder Epoxidharz vorgesehen. Die Decklage ist insbesondere deutlich breiter als das Trägerband ausgebildet.

Gemäß einer Ausführungsform sind die Kabelbefestigungselemente als Kabelsockel ausgebildet. Derartige Kabelsockel weisen eine oder mehrere Öffnungen oder Ösen auf, mittels welcher weitere Elemente wie Kabel oder Leerrohre mit den Kabelbefestigungselementen verbunden werden können. Beispielsweise kann zur Führung von Kabeln ein geschlitztes Leerrohr verwendet werden. Ein geschlitztes Leerrohr ermöglicht eine Zugänglichkeit der Kabel für Inspektionen und Wartungen. Das Leerrohr ist beispielsweise als ein sinusförmig-geschlitztes Leerrohr ausgebildet. Dies bedeutet, dass der Verlauf des Schlitzes sinusförmig ist. Dadurch können im Leerrohr geführte Kabel besonders gut in dieses eingesetzt und gehalten werden. Das Leerrohr kann in einem Abschnitt mittels des Schlitzes aufgedehnt werden, um beispielsweise ein im Leerrohr verlaufendes Kabel für Wartungsarbeiten zu entnehmen.

Gemäß einer Ausführungsform weisen die Kabelbefestigungselemente Öffnungen oder Durchbrüche auf, wobei die Öffnungen oder Durchbrüche zum Befestigen von Kabeln, Rohren oder Verbindungselementen ausgebildet sind. Beispielsweise handelt es sich bei den Öffnungen oder Durchbrüchen um Ösen. Die Öffnungen oder Durchbrüche ermöglichen das Anbringen von Kabelbindern oder anderen Verbindungselementen zum Verbinden weiterer Komponenten mit den Kabelbefestigungselementen. Beispielsweise sind die Kabelbefestigungselemente als Kabelbinderaufnahmen ausgestaltet. Die Öffnungen oder Durchbrüche erstrecken sich beispielsweise in einer oder mehreren Richtungen entlang einer Haupterstreckungsebene des Halbzeugs. Mit anderen Worten erstecken sich diese parallel zum Trägerband. Dies ermöglicht das Anbringen von Kabeln, Leerrohren oder anderen Verbindungselementen wie Kabelbindern in unterschiedlichen Ausrichtungen.

Gemäß einer Ausführungsform sind die Kabelbefestigungselemente derart ausgebildet, dass ein Leerrohr, ein Kabel oder ein Verbindungselement verrastend in den Öffnungen oder Durchbrüchen der Kabelbefestigungselemente aufgenommen werden kann. Dies ermöglicht eine besonders einfache Anbringung der genannten Elemente, wobei keine zusätzlichen Komponenten oder Maßnahmen nötig sind.

Gemäß einer Ausführungsform weisen die Kabelbefestigungselemente jeweils ein Schutzelement auf, welches ein Eindringen von Fluid in eine jeweilige Öffnung oder einen jeweiligen Durchbruch zumindest teilweise verhindert. Bei dem Fluid handelt es sich beispielsweise um einen flüssigen Kunststoff, der beim Weiterverarbeitungsprozess, etwa einem Infusionsprozess wie dem Vakuuminfusionsprozess, verwendet wird. Bei dem Schutzelement handelt es sich beispielsweise um eine Haube, eine Kappe oder eine Matte, die die Öffnungen oder Durchbrüche verschließt. Als Material für das Schutzelement kommt beispielsweise Silikon in Frage.

Gemäß einer Ausführungsform ist das Halbzeug so flexibel ausgebildet, dass das Halbzeug auf eine Rolle aufwickelbar ist. Insbesondere das Trägerband muss demnach so stark dimensioniert werden, dass es auf Rollen aufwickelbar ist. Dadurch kann das Halbzeug auf einfache Weise transportiert und aber auch von den Rollen abgewickelt werden und weiterverarbeitet werden.

Gemäß einem weiteren Aspekt wird ein Windenergieanlagenbauteil offenbart, welches ein Halbzeug gemäß dem zuvor beschriebenen Aspekt aufweist. Das Halbzeug ist mittels Laminierung fest mit dem Windenergieanlagenbauteil verbunden oder integraler Bestandteil des fertigen Bauteils.

Das Windenergieanlagenbauteil ermöglicht im Wesentlichen die vorgenannten Vorteile und Funktionen. Ausführungen bzgl. des Halbzeugs gemäß dem zuvor beschrieben Aspekt gelten analog.

Gemäß einer Ausführungsform weisen die Kabelbefestigungselemente jeweils einen Durchbruch auf, durch den ein Kabelbinder geführt ist. Weiter ist ein Leerrohr vorgesehen, welches entlang der Kabelbefestigungselemente verläuft und mittels der Kabelbinder an den Kabelbefestigungselementen festgelegt ist. Das Leerrohr ist ausgebildet, ein oder mehrere Kabel aufzunehmen und so zu führen. Das Windenergieanlagenbauteil ermöglicht somit die vorgenannten Vorteile und Funktionen und insbesondere ein besonders einfach aufgebautes und effektives Kabelführungssystem.

Gemäß einem weiteren Aspekt wird ein Windenergieanlagenrotorblatt offenbart, welches ein Halbzeug gemäß dem zuvor beschriebenen Aspekt aufweist. Das Windenergieanlagenrotorblatt ermöglicht im Wesentlichen die vorgenannten Vorteile und Funktionen. Ausführungen bzgl. des Halbzeugs gemäß dem zuvor beschrieben Aspekt gelten analog.

Bevorzugt weist das Windenergieanlagenrotorblatt in allen Bereichen, in denen mögliche Kabelverläufe liegen, Halbzeuge gemäß dem zuvor beschriebenen Aspekt auf. Mit anderen Worten werden unabhängig von den tatsächlich später eingesetzten und verbauten elektrischen und optischen Systemen die Halbzeuge an sämtlichen, relevanten Stellen verbaut. Dadurch wird eine flexible Produktionsplanung gewährleistet, insbesondere ist es möglich, im Nachhinein flexibel jegliche Zusatzsysteme zu verbauen und entsprechend die Kabel zu führen.

Gemäß einem weiteren Aspekt wird ein Verfahren zum Herstellen eines Windenergieanlagenbauteils mit einem Kabelführungssystem offenbart. Das Verfahren weist die folgenden Schritte auf:
Einbringen eines Fasermateriallagenaufbaus für das Windenergieanlagenbauteil in eine entsprechende Fertigungsform, wobei der Fasermateriallagenaufbau ein Halbzeug nach einem der Ansprüche 1 bis 10 aufweist, und
Laminieren des Fasermateriallagenaufbaus in einem Infusionsverfahren, insbesondere in einem Vakuuminfusionsverfahren, zum Bilden des Windenergieanlagenbauteils mit einem Kabelführungssystem.

Das Verfahren ermöglicht im Wesentlichen die vorgenannten Vorteile und Funktionen. Ausführungen bzgl. des Halbzeugs gemäß dem zuvor beschrieben Aspekt gelten analog. Das Verfahren kann entsprechend dieser Ausführungen sinngemäß weitergebildet sein und entsprechend weitere Schritte haben.

Der Fasermateriallagenaufbau kann auch als Laminataufbau bezeichnet werden und weist mehrere Lagen aus Faserhalbzeugen, etwa Gewebe, Gelege, Matten oder anderes, auf. Im Laminierungsschritt wird Kunststoffmaterial, welches auch Matrixmaterial genannt wird, infundiert. Anschließend härtet der Laminataufbau aus zu einem Laminat, sodass das Windenergieanlagenbauteil gebildet ist. Bei dem beschriebenen Verfahren wird das Halbzeug beim Herstellen des Windenergieanlagenbauteils verwendet. Mit anderen Worten ist das Halbzeug integraler Bestandteil des Laminataufbaus bei der Herstellung des entsprechenden Bauteils.

Es wird ein weiteres Verfahren gemäß einem weiteren Aspekt zum Herstellen eines Windenergieanlagenbauteils mit einem Kabelführungssystem offenbart, welches die folgenden Schritte aufweist:
Bereitstellen eines bereits fertig ausgehärteten Laminats,
Anordnen eines Halbzeugs gemäß dem zuvor beschriebenen Aspekt an dem Laminat, und
Anlaminieren des Halbzeugs an das Laminat zum Bilden des Windenergieanlagenbauteils mit einem Kabelführungssystem.

Das Verfahren ermöglicht im Wesentlichen die vorgenannten Vorteile und Funktionen. Ausführungen bzgl. des Halbzeugs gemäß dem zuvor beschrieben Aspekt gelten analog. Das Verfahren kann entsprechend dieser Ausführungen sinngemäß weitergebildet sein und entsprechend weitere Schritte haben.

Im Unterschied zu dem zuvor beschriebenen Verfahren wird das Halbzeug erst nachträglich an ein bereits fertig hergestelltes Laminat anlaminiert. Bei dem fertig ausgehärteten Laminat handelt es sich beispielsweise um eine Halbschale eines Rotorblatts, einen Steg, einen Gurt oder eine Bodenplatte. Mit anderen Worten handelt es sich um ein Bauteil oder eine Komponente eines Windenergieanlagenrotorblattes, welches ein Laminat aufweist.

Weitere Vorteile, Merkmale und Weiterbildungen ergeben sich aus der nachfolgenden, in Verbindung mit den Figuren erläuterten Beschreibung von Ausführungsbeispielen. Gleiche, gleichartige oder gleichwirkende Elemente können in den Figuren mit den gleichen Bezugszeichen versehen sein.

In den Figuren zeigen:
Figur 1 eine schematische Darstellung einer Windenergieanlage,
Figur 2 eine schematische Darstellung eines Rotorblatts der Windenergieanlage, und
Figur 3 eine perspektivische, schematische Ansicht eines Halbzeugs gemäß einem Ausführungsbeispiel der Erfindung,
Figur 4 eine perspektivische, schematische Ansicht eines Kabelbefestigungselements für ein Halbzeug gemäß einem Ausführungsbeispiel der Erfindung, und
Figur 5 ein schematisches Ablaufdiagramm von Verfahren Verfahrens zum Herstellen eines Windenergieanlagenbauteils gemäß einem Ausführungsbeispiel der Erfindung.

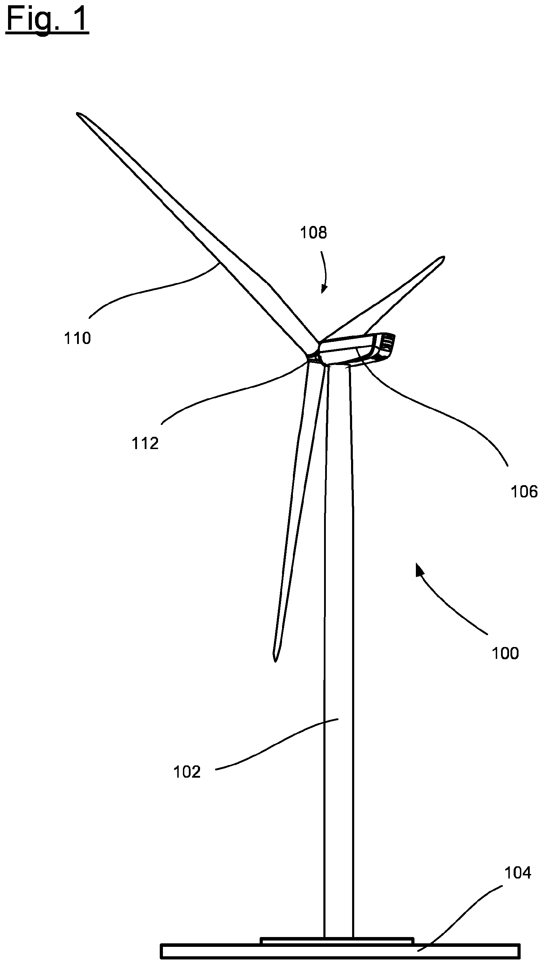

Figur 1 zeigt eine schematische Darstellung einer Windenergieanlage 100. Die Windenergieanlage 100 weist einen Turm 102 auf. Der Turm 102 ist mittels eines Fundaments 104 auf einem Untergrund befestigt. An einem dem Untergrund gegenüberliegenden Ende des Turms 102 ist eine Gondel 106 drehbar gelagert. Die Gondel 106 weist beispielsweise einen Generator auf, der über eine Rotorwelle (nicht gezeigt) mit einem Rotor 108 gekoppelt ist. Der Rotor 108 weist ein oder mehrere (Windenergieanlagen)Rotorblätter 110 auf, die an einer Rotornabe 112 angeordnet sind.

Der Rotor 108 wird im Betrieb durch eine Luftströmung, beispielsweise Wind, in Rotation versetzt. Diese Rotationsbewegung wird über die Rotorwelle und gegebenenfalls ein Getriebe auf den Generator übertragen. Der Generator wandelt die kinetische Energie des Rotors 108 in elektrische Energie um.

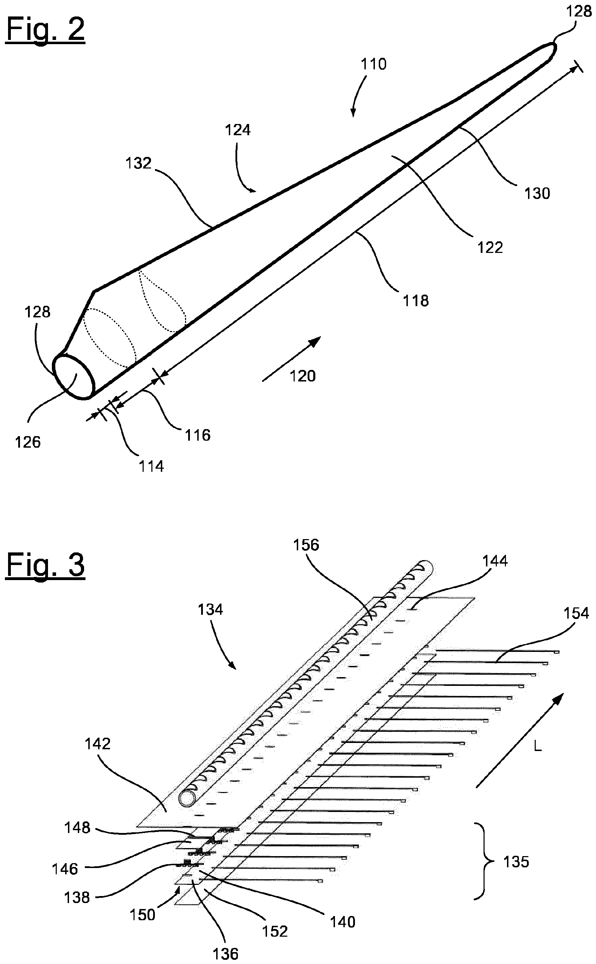

Figur 2 zeigt ein exemplarisches Windenergieanlagenrotorblatt 110. Das Rotorblatt 110 hat die Form eines herkömmlichen Rotorblattes und hat einen Rotorblattwurzelbereich 114, der der Rotornabe 112 zugewandt bzw. zugeordnet ist. Der Rotorblattwurzelbereich 114 hat typischerweise einen im Wesentlichen kreisrunden Querschnitt. An den Rotorblattwurzelbereich 114 schließen sich ein Übergangsbereich 116 und ein Profilbereich 118 des Rotorblatts 110 an. Das Rotorblatt 110 hat eine Längsachse 120 sowie eine Druckseite 122 und eine gegenüberliegende Saugseite 124. Das Rotorblatt 110 ist im Inneren im Wesentlichen hohl ausgebildet. Das Rotorblatt 110 hat ein blattwurzelseitiges Ende 126 und ein blattspitzenseitiges Ende 128. Das Rotorblatt 110 hat eine Profilnasenkante 130 und eine Profilendkante 132.

Wie eingangs erwähnt, können Rotorblätter ein oder mehrere elektrische und/oder optische Systeme haben, die das Verlegen von unterschiedlichen Kabeln im bzw. am Rotorblatt erforderlich machen. Beispielsweise müssen Stromkabel und/oder Datenkabel verlegt und geführt werden. Dies bedingt typischerweise das Vorsehen von Kabelführungssystemen.

Figur 3 zeigt schematisch in einer Explosionsdarstellung ein Halbzeug 134 gemäß einem Ausführungsbeispiel der Erfindung für ein Kabelführungssystem. Das Halbzeug 134 ist schichtartig aufgebaut (schichtartiger Aufbau 135) und wird als Baueinheit gefertigt verwendet. Im fertigen Zustand (nicht in Figuren gezeigt) weist es einen besonders flachen Aufbau auf.

Das Halbzeug 134 weist ein ausgehärtetes Trägerband 136 auf, welches aus glasfaserverstärktem Kunststoff gefertigt ist. Das Halbzeug 134 weist eine Mehrzahl von Kabelbefestigungselementen 138 auf, die der Länge L des Halbzeugs 134 nach am Trägerband 136 positioniert und mittels Verklebungen 140 am Trägerband 136 festgelegt sind. Das Halbzeug 134 weist eine Decklage 142 auf, die als Glasfasergelege ausgebildet ist. Die Decklage 142 ist im gezeigten Aufbau gemäß der Figur 3 die oberste Lage des Halbzeugs 134 und liegt über den Kabelbefestigungselementen 138. Die Decklage 142 weist korrespondierend zu den Kabelbefestigungselementen 138 Aus- bzw. Einschnitte 144 auf, durch welche die Kabelbefestigungselemente 138 zumindest bereichsweise aus dem Halbzeug 134 herausragen. Die Kabelbefestigungselemente 138 sind zwischen Decklage 142 und Trägerband 136 sicher gehalten.

Das Halbzeug 134 weist weiterhin ein optionales Gitterklebeband 146 auf, welches die Decklage 142 mit dem Trägerband 136 fest verbindet. Das Gitterklebeband 146 verklebt auch bereichsweise die Kabelbefestigungselemente 138 mit der Decklage 142 und trägt dazu bei, dass der Aufbau des Halbzeugs 134 und insbesondere die Kabelbefestigungselemente 138 sicher gehalten sind. Das Gitterklebeband 146 weist ebenfalls mehrere Aus- bzw. Einschnitte 148 auf, die zu den Kabelbefestigungselementen 138 korrespondieren und durch die sich die Kabelbefestigungselemente 138 zumindest teilweise erstrecken.

Auf einer Unterseite 150 des Trägerbands 136, die den Kabelbefestigungselementen 138 abgewandt ist, ist ein optionales Abreißgewebe 152 wie eingangs erläutert angebracht.

Das Halbzeug 134 ermöglicht die eingangs genannten Vorteile und Funktionen. Unter anderem ermöglicht das Halbzeug 134 ein besonders flexibles, einfach und kostengünstig herstellbares sowie besonders gut handhabbares Kabelführungssystem für ein Windenergieanlagenbauteil. Das Halbzeug 134 ermöglicht mittels der Kabelbefestigungselemente 138 insbesondere die mittelbare oder unmittelbare Anbringung von Kabeln und dadurch die Ausbildung eines Kabelführungssystems. Je nach Ausbildung der Kabelbefestigungselemente 138 können beispielsweise Kabel direkt, mittels zusätzlicher Verbindungselemente oder mittels Leerrohre am Halbzeug 134 geführt sein. Das Halbzeug 134 ist so ausgebildet, dass es auf eine Rolle auf- bzw. von dieser abwickelbar ist. Insbesondere das Trägerband 136 ist zwar ausgehärtet und dadurch biegesteifer als das Gitterklebeband 146 oder die Decklage 142, dennoch ermöglicht das Trägerband 136 das Auf- bzw. Abwickeln.

Bei dem Windenergieanlagenbauteil handelt es sich beispielsweise um das oben erwähnte Windenergieanlagenrotorblatt 110 bzw. eine Komponente davon, wie etwa eine Halbschale, die Bodenplatte oder andere Komponenten mit einem Laminat.

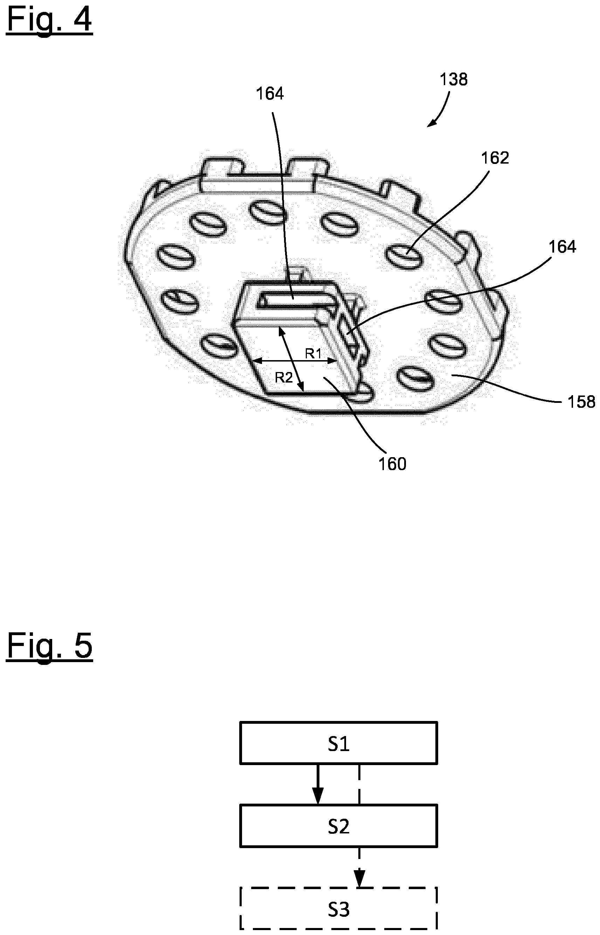

Das Halbzeug 134 wird beispielsweise bei der Fertigung eines Windenergieanlagenbauteils verwendet und dadurch integraler Bestandteil des Bauteils. Alternativ wird das Halbzeug nach der Fertigung des Windenergieanlagenbauteils, d.h. nach dessen Aushärtung, in einem weiteren Fertigungsschritt an das Windenergieanlagenbauteil anlaminiert. Dies wird anhand der Figur 5 im Folgenden erläutert.

Figur 3 zeigt eine beispielhafte Ausgestaltung, bei der die Kabelbefestigungselemente 138 als Kabelsockel ausgebildet sind und ein oder mehrere Durchbrüche (nicht mit Bezugszeichen versehen) aufweisen. Durch diese Durchbrüche werden Kabelbinder 154 geführt, die der Befestigung eines Leerrohres 156 dienen. Das Leerrohr 156 ist ausgebildet ein oder mehrere Kabel zu führen. Das Leerrohr 156 kann geschlitzt ausgebildet sein, so dass die Kabel durch Aufdehnen des Leerrohres 156 entlang des Schlitzes in das Leerrohr 156 eingelegt werden können. Die schlitzartige Ausbildung ermöglicht im Besonderen eine einfache Montage wie auch Demontage der Kabel, insbesondere zu Wartungszwecken. Der Verlauf des Schlitzes entlang der Länge L kann optional sinusförmig sein.

Figur 4 zeigt ein Ausführungsbeispiel eines Kabelbefestigungselements 138, welches als Kabelsockel ausgebildet ist. Das Kabelbefestigungselement 138 weist eine Platte 158 auf, von der ein Sockelkörper 160 absteht. Die Platte 158 hat mehrere durchgängige Öffnungen 162, die bei der Laminierung mit Kunststoff gefüllt werden, so dass ein Formschluss des Kabelbefestigungselements 138 mit dem Kunststoff erreicht ist. Der Sockelkörper 160 hat Durchbrüche 164, die sich entlang zweier Richtungen R1 und R2 parallel zu der Platte 158 und damit auch dem Trägerband 136 bzw. dem Halbzeug 134 erstrecken. Dadurch können in den Richtungen R1 und R2 Verbindungselemente wie die erwähnten Kabelbinder durchgeführt werden. Insbesondere der Sockelkörper 160 taucht größtenteils durch die Aus- bzw. Einschnitte in dem Gitterklebeband 146 und der Decklage 142 eines Halbzeugs 134. Im Folgenden werden anhand der Figur 5 schematisch zwei Herstellungsverfahren für ein Windenergieanlagenbauteil beschrieben gemäß Ausführungsbeispielen der Erfindung beschrieben.

In einem ersten Schritt S1 des ersten Herstellungsverfahrens wird ein Fasermateriallagenaufbau für das Windenergieanlagenbauteil in einer entsprechenden Fertigungsform eingebracht. Der Fasermateriallagenaufbau weist ein Halbzeug 134 wie oben anhand der Figur 3 beschrieben auf. Mit anderen Worten wird neben einer Mehrzahl von Fasermateriallagen wie Geweben etc. das Halbzeug 134, beispielsweise als letzte Lage, in die Fertigungsform eingelegt. Zusammen bilden die Fasermateriallagen und das Halbzeug 134 den Fasermateriallagenaufbau. Es sei erwähnt, dass vor dem Einlegen des Halbzeugs 134 das eventuell angebrachte Abreißgewebe 152 entfernt wird.

Anschließend wird der Fasermateriallagenaufbau in einem nächsten Schritt S2 laminiert. Dabei wird ein Vakuuminfusionsverfahren angewandt. Dabei wird (Matrix-) Kunststoff wie Epoxidharz infundiert und der Aufbau härtet anschließend aus. Dadurch weist das Windenergieanlagenbauteil das Halbzeug 134 als integralen Bestandteil auf, so dass ein Kabelführungssystem gebildet ist.

In einem ersten Schritt S1 des zweiten Herstellungsverfahrens wird ein bereits fertig ausgehärtetes Laminat bereitgestellt.

In einem zweiten Schritte S2 wird das Halbzeug 134 an das Laminat angeordnet, etwa auf dieses aufgelegt und positioniert. Unterstützend können Klebebänder wie Gitterklebebänder verwendet werden, um eine für die weitere Fertigung sichere Positionierung des Halbzeugs 134 auf dem Laminat zu gewährleisten. Wiederum wird das Abreißgewebe 152 bei Vorhandensein vor dem Anordnen am Laminat entfernt.

In einem dritten Schritt S3 (gestrichelt gekennzeichnet, da nur für das zweite Herstellungsverfahren relevant) wird das Halbzeug 134 an das Laminat zum Bilden des Windenergieanlagenbauteils mit einem Kabelführungssystem anlaminiert. Dies bedeutet wiederum, dass eine Infusion mit (Matrix-)Kunststoff stattfindet. Anschließend härtet das Halbzeug 134 aus und ist fest mit dem Windenergieanlagenbauteil verbunden.

In späteren Schritten können nun bei beiden Herstellungsverfahren je nach Ausbildung der Kabelbefestigungselemente 138 Kabelbinder, Leerrohre und/oder Kabel befestigt werden.

In nicht gezeigten Ausführungsbeispielen sind Schutzelemente wie Silikonhauben vorgesehen, die vor den Schritten des Laminierens, d.h. dem Einbringen und Aushärten von Kunststoff, auf die Kabelbefestigungselemente 138 aufgesetzt werden, um deren Öffnungen bzw. Durchbrüche vor einem Eindringen des Kunststoffs zu schützen. Dabei müssen vor allem die Öffnungen/Durchbrüche geschützt werden, in welche später Leerrohre, Verbindungselemente wie Kabelbinder, Kabel oder dergleichen eingesetzt oder eingeführt werden.

### BEZUGSZEICHENLISTE

- 100: Windenergieanlage
- 102: Turm
- 104: Fundament
- 106: Gondel
- 108: Rotor
- 110: Rotorblatt, Windenergieanlagenrotorblatt
- 112: Rotornabe
- 114: Rotorblattwurzelbereich
- 116: Übergangsbereich
- 118: Profilbereich
- 120: Längsachse
- 122: Druckseite
- 124: Saugseite
- 126: blattwurzelseitiges Ende
- 128: blattspitzenseitiges Ende
- 130: Profilnasenkante
- 132: Profilendkante
- 134: Halbzeug
- 135: schichtartiger Aufbau
- 136: Trägerband
- 138: Kabelbefestigungselemente
- 140: Verklebung
- 142: Decklage
- 144: Aus- bzw. Einschnitt
- 146: Gitterklebeband
- 148: Aus- bzw. Einschnitt
- 150: Unterseite
- 152: Abreißgewebe
- 154: Kabelbinder
- 156: Leerrohr
- 158: Platte
- 160: Sockelkörper
- 162: Öffnungen der Platte
- 164: Durchbrüche
- L: Länge
- R1: Richtung
- R2: Richtung

## Patentansprüche

1. Halbzeug (134) für ein Kabelführungssystem bei einem Windenergieanlagenbauteil, aufweisend einen schichtartigen Aufbau (135) mit
einem Trägerband (136),
einer Mehrzahl von Kabelbefestigungselementen (138), die der Länge (L) nach verteilt auf dem Trägerband (136) festgelegt sind, **gekennzeichnet durch**
eine Decklage (142) mit mehreren Aus- oder Einschnitten (144), wobei die Kabelbefestigungselemente (138) zwischen Decklage (142) und Trägerband (136) so angeordnet sind, dass jedes Kabelbefestigungselement (138) zumindest teilweise aus einem entsprechenden Aus- oder Einschnitt (144) aus der Decklage (142) hervorragt.

2. Halbzeug (134) nach Anspruch 1, wobei die Kabelbefestigungselemente (138) auf das Trägerband (136) aufgeklebt sind.

3. Halbzeug (134) nach Anspruch 1 oder 2, aufweisend ein oder mehrere Klebebänder, insbesondere ein Gitterklebeband (146), welche zwischen der Decklage (142) und dem Trägerband (136) angeordnet sind und die Decklage (142) mit dem Trägerband (136) miteinander klebend verbinden.

4. Halbzeug (134) nach einem der vorhergehenden Ansprüche, wobei das Trägerband (136) auf einer Unterseite (150), die den Kabelbefestigungselementen (138) abgewandt ist, eine Lage eines Abreißgewebes (152) aufweist.

5. Halbzeug (134) nach einem der vorhergehenden Ansprüche, wobei die Decklage (142) ein oder mehrere Fasermateriallagen aufweist.

6. Halbzeug (134) nach einem der vorhergehenden Ansprüche, wobei die Kabelbefestigungselemente (138) als Kabelsockel ausgebildet sind.

7. Halbzeug (134) nach einem der vorhergehenden Ansprüche, wobei die Kabelbefestigungselemente (138) Öffnungen oder Durchbrüche (164) aufweisen, wobei die Öffnungen oder Durchbrüche (164) zum Befestigen von Kabeln, Rohren oder Verbindungselementen ausgebildet sind.

8. Halbzeug (134) nach Anspruch 7, wobei die Kabelbefestigungselemente (138) derart ausgebildet sind, dass ein Leerrohr, ein Kabel oder Verbindungselement verrastend in den Öffnungen oder Durchbrüchen (164) aufgenommen werden kann.

9. Halbzeug (134) nach Anspruch 7 oder 8, wobei die Kabelbefestigungselemente (138) jeweils ein Schutzelement aufweisen, welches ein Eindringen von Fluid in eine jeweilige Öffnung oder einen jeweiligen Durchbruch (164) zumindest teilweise verhindert.

10. Halbzeug (134) nach einem der vorhergehenden Ansprüche, wobei das Halbzeug (134) so flexibel ausgebildet ist, dass das Halbzeug (134) auf eine Rolle aufwickelbar ist.

11. Windenergieanlagenbauteil (110), aufweisend ein Halbzeug (134) nach einem der Ansprüche 1 bis 10.

12. Windenergieanlagenbauteil (110) nach Anspruch 11, wobei die Kabelbefestigungselemente (138) jeweils einen Durchbruch (164) aufweisen, durch den ein Kabelbinder (154) geführt ist, wobei weiter ein Leerrohr, insbesondere ein geschlitztes Leerrohr, vorgesehen ist, welches entlang der Kabelbefestigungselemente (138) verläuft und mittels der Kabelbinder (154) an den Kabelbefestigungselementen (138) festgelegt ist.

13. Windenergieanlagenrotorblatt (110), aufweisend ein Halbzeug (134) nach einem der Ansprüche 1 bis 10.

14. Verfahren zum Herstellen eines Windenergieanlagenbauteils mit einem Kabelführungssystem, aufweisend die folgenden Schritte:
Einbringen eines Fasermateriallagenaufbaus für das Windenergieanlagenbauteil in eine entsprechende Fertigungsform, wobei der Fasermateriallagenaufbau ein Halbzeug (134) nach einem der Ansprüche 1 bis 10 aufweist, und
Laminieren des Fasermateriallagenaufbaus in einem Infusionsverfahren, insbesondere in einem Vakuuminfusionsverfahren, zum Bilden des Windenergieanlagenbauteils mit einem Kabelführungssystem.

15. Verfahren zum Herstellen eines Windenergieanlagenbauteils mit einem Kabelführungssystem, aufweisend die folgenden Schritte:
Bereitstellen eines bereits fertig ausgehärteten Laminats,
Anordnen eines Halbzeugs (134) nach einem der Ansprüche 1 bis 10 an dem Laminat, und
Anlaminieren des Halbzeugs (134) an das Laminat zum Bilden des Windenergieanlagenbauteils mit einem Kabelführungssystem.

## Claims

1. A semi-finished product (134) for a cable guide system in a wind turbine component, including a layer-like structure (135) with
a carrier strip (136),
a plurality of cable fastening elements (138), which distributed along the length (L) are fixed on the carrier strip (136), **characterized by**
a cover layer (142) with several cutouts or incisions (144), wherein the cable fastening elements (138) are arranged between the cover layer (142) and the carrier strip (136) such that each cable fastening element (138) protrudes out from the cover layer (142) at least in part from a corresponding cutout or incision (144).

2. The semi-finished product (134) according to claim 1, wherein the cable fastening elements (138) are adhesively bonded to the carrier strip (136).

3. The semi-finished product (134) according to claim 1 or 2, including one or several adhesive tapes, in particular a grid adhesive tape (146), which are arranged between the cover layer (142) and the carrier strip (136) and adhesively bond the cover layer (142) and the carrier strip (136) to one another.

4. The semi-finished product (134) according to any one of the preceding claims, wherein the carrier strip (136) includes a layer of peel ply (152) on an underside (150) facing away from the cable fastening elements (138).

5. The semi-finished product (134) according to any one of the preceding claims, wherein the cover layer (142) includes one or more fiber material layers.

6. The semi-finished product (134) according to any one of the preceding claims, wherein the cable fastening elements (138) are formed as cable bases.

7. The semi-finished product (134) according to any one of the preceding claims, wherein the cable fastening elements (138) include openings or breakthroughs (164), wherein the openings or breakthroughs (164) are formed for fastening cables, tubes or connecting elements.

8. The semi-finished product (134) according to claim 7, wherein the cable fastening elements (138) are formed such that an empty tube, a cable or connecting element may be received within the openings or breakthroughs (164) in an interlocking manner.

9. The semi-finished product (134) according to claim 7 or 8, wherein the cable fastening elements (138) each include a protecting element which prevents fluid at least in part from penetrating into a respective opening or breakthrough (164).

10. The semi-finished product (134) according to any one of the preceding claims, wherein the semi-finished product (134) is formed to be flexible such that the semi-finished product (134) may be wound upon a roll.

11. A wind turbine component (110), including a semi-finished product (134) according to any one of claims 1 to 10.

12. The wind turbine component (110) according to claim 11, wherein the cable fastening elements (138) each include a breakthrough (164) through which a cable tie (154) is guided, wherein furthermore an empty tube, in particular a slotted empty tube, is provided which extends along the cable fastening elements (154) and is fixed to the cable fastening elements (138) by means of the cable ties (154).

13. Wind turbine rotor blade (110), including a semi-finished product (134) according to any one of claims 1 to 10.

14. A method for producing a wind turbine component with a cable guide system, including the steps of:
inserting a fiber material layer structure for the wind turbine component into a corresponding manufacturing mold, wherein the fiber material layer structure includes a semi-finished product (134) according to any one of claims 1 to 10, and
laminating the fiber material layer structure in an infusion process, in particular in a vacuum infusion process, for forming the wind turbine component with a cable guide system.

15. The method for producing a wind turbine component with a cable guide system, including the steps of:
providing an already completely cured laminate,
arranging a semi-finished product (134) according to any one of claims 1 to 10 on the laminate, and
laminating the semi-finished product (134) onto the laminate for forming the wind turbine component having a cable guide system.

## Revendications

1. Produit semi-fini (134) pour un système de guidage de câble dans le cas d'un composant d'éolienne, présentant une structure en couches (135) avec
une bande porteuse (136),
une pluralité d'éléments de fixation de câble (138) qui sont fixés sur la bande porteuse (136) de manière répartie sur la longueur (L), **caractérisé par**
une couche de couverture (142) présentant plusieurs découpes ou entailles (144), sachant que les éléments de fixation de câble (138) sont disposés entre la couche de couverture (142) et la bande porteuse (136) de telle sorte que chaque élément de fixation de câble (138) dépasse au moins en partie de la couche de couverture (142) par une découpe ou entaille (144) correspondante.

2. Produit semi-fini (134) selon la revendication 1, sachant que les éléments de fixation de câble (138) sont collés sur la bande porteuse (136).

3. Produit semi-fini (134) selon la revendication 1 ou 2, présentant une ou plusieurs bandes collantes, en particulier une bande collante à treillis (146), lesquelles sont disposées entre la couche de couverture (142) et la bande porteuse (136) et relient la couche de couverture (142) à la bande porteuse (136) l'une à l'autre de manière collante.

4. Produit semi-fini (134) selon l'une des revendications précédentes, sachant que la bande porteuse (136) présente une couche d'un tissu d'arrachage (152) sur le côté inférieur (150) qui est opposé aux éléments de fixation de câble (138).

5. Produit semi-fini (134) selon l'une des revendications précédentes, sachant que la couche de couverture (142) présente une ou plusieurs couches de matériau de fibres.

6. Produit semi-fini (134) selon l'une des revendications précédentes, sachant que les éléments de fixation de câble (138) sont constitués comme prises de câble.

7. Produit semi-fini (134) selon l'une des revendications précédentes, sachant que les éléments de fixation de câble (138) présentent des ouvertures ou des percées (164), sachant que les ouvertures ou percées (164) sont constituées pour la fixation de câbles, de tubes ou d'éléments de liaison.

8. Produit semi-fini (134) selon la revendication 7, sachant que les éléments de fixation de câble (138) sont constitués de telle manière qu'un tube vide, un câble ou un élément de liaison puisse être logé par encliquetage dans les ouvertures ou percées (164).

9. Produit semi-fini (134) selon la revendication 7 ou 8, sachant que les éléments de fixation de câble (138) présentent respectivement un élément de protection, lequel empêche au moins en partie une pénétration de fluide dans une ouverture respective ou une percée (164) respective.

10. Produit semi-fini (134) selon l'une des revendications précédentes, sachant que le produit semi-fini (134) est constitué de manière flexible de telle sorte que le produit semi-fini (134) soit enroulable sur un rouleau.

11. Composant d'éolienne (110), présentant un produit semi-fini (134) selon l'une des revendications 1 à 10.

12. Composant d'éolienne (110) selon la revendication 11, sachant que les éléments de fixation de câble (138) présentent respectivement une percée (164) par laquelle une attache de câble (154) est guidée, sachant qu'un tube vide, en particulier un tube vide fendu, est en outre prévu, lequel passe le long des éléments de fixation de câble (138) et est fixé aux éléments de fixation de câble (138) moyennant les attaches de câble (154).

13. Pale de rotor d'éolienne (110), présentant un produit semi-fini (134) selon l'une des revendications 1 à 10.

14. Procédé de fabrication d'un composant d'éolienne comportant un système de guidage de câble, présentant les étapes suivantes :
introduction d'une structure de couches de matériau en fibres pour le composant d'éolienne dans un moule de fabrication correspondant, sachant que la structure de couches de matériau en fibres présente un produit semi-fini (134) selon l'une des revendications 1 à 10, et
stratification de la structure de couches de matériau en fibres dans un procédé d'infusion, en particulier dans un procédé d'infusion sous vide, pour former le composant d'éolienne avec un système de guidage de câble.

15. Procédé de fabrication d'un composant d'éolienne comportant un système de guidage de câble, présentant les étapes suivantes :
mise à disposition d'un stratifié déjà durci complètement,
disposition d'un produit semi-fini (134) selon l'une des revendications 1 à 10 sur le stratifié, et
pose par stratification du produit semi-fini (134) sur le stratifié pour former le composant d'éolienne comportant un système de guidage de câble.
